# EUROPÄISCHE PATENTSCHRIFT

(11) **EP 4 317 094 B1**
(45) Veröffentlichungstag und Bekanntmachung des Hinweises auf die Patenterteilung: **15.04.2026**
(21) Anmeldenummer: 23177627.9
(22) Anmeldetag: 06.06.2023
(51) Int. Cl.: C03C 3/093, C03C 3/097, C03C 8/04, C03C 8/16, C03C 10/00, C03C 17/04, C03C 14/00, C03C 23/00

(54) **PLATTE UMFASSEND GLAS ODER GLASKERAMIK, VERFAHREN ZU DEREN HERSTELLUNG SOWIE DEREN VERWENDUNG**
PLATE COMPRISING GLASS OR GLASS CERAMIC, METHOD FOR THE PRODUCTION THEREOF AND USE THEREOF
PLAQUE COMPRENANT DU VERRE OU DU VITROCÉRAMIQUE, SON PROCÉDÉ DE FABRICATION ET SON UTILISATION

(30) Priorität: 04.08.2022 DE 102022119588
(43) Veröffentlichungstag der Anmeldung: 07.02.2024
(73) Patentinhaber: SCHOTT AG, 55122 Mainz (DE)
(72) Erfinder: MANGOLD, Stephanie, 55122 Mainz (DE); DREWKE, Jochen, 55122 Mainz (DE)
(74) Vertreter: Schott Corporate IP

(56) Entgegenhaltungen:
- WO-A1-2016/075972
- CN-A- 101 691 310
- US-A1- 2020 354 264
- US-A1- 2021 188 701
- US-B2- 7 763 832

## Beschreibung

### Gebiet der Erfindung

Die Erfindung betrifft allgemein Platten umfassend Glas oder Glaskeramik, insbesondere solche, welche wenigstens teilweise mit einer Beschichtung belegt sind, ein Verfahren zur Herstellung solcher Platten sowie deren Verwendung.

Im Speziellen betrifft die Erfindung eine Platte umfassend ein Glas oder eine Glaskeramik, insbesondere ein Lithium-Aluminium-Silikatglas oder eine Lithium-Aluminium-Silikatglaskeramik, die eine Beschichtung umfasst.

Beschichtete Glas- oder Glaskeramikplatten sind bereits seit langem bekannt und finden seit vielen Jahren Einsatz beispielsweise als Abdeckplatten von Kochgeräten (beispielsweise auch genannt "Kochfelder" oder "Kochflächen"). In der Regel sind solche Platten mit wenigstens einer Beschichtung versehen. Bekannt sind beispielsweise Platten umfassend ein volumengefärbtes Substrat, auf welchem auf der dem Benutzer zugewandten Seite (auch als "Oberseite" oder "Vorderseite" bezeichnet) sogenannte Kochzonenmarkierungen aufgebracht sind. Auch der Druck von Logos ist bekannt. Weiterhin sind auch Platten umfassend ein nicht-volumengefärbtes Substrat bekannt, auf welchem eine sogenannte "Unterseitenbeschichtung" aufgebracht ist. Je nach der genauen Ausgestaltung einer solchen Platte können unterschiedliche Beschichtungen auf unterschiedlichen Seiten einer solchen Platte miteinander kombiniert werden.

Als Auftragsverfahren der Wahl werden in der Regel Druckverfahren verwendet. Stand der Technik ist hier insbesondere das Siebdruckverfahren, welches einen hohen Durchsatz bei der Fertigung bedruckter Platten erlaubt. Nachteilig ist daran allerdings, dass diese Platten stets gleich bedruckt sein müssen und für unterschiedliche Druckfarben unterschiedliche Verfahrensschritte notwendig sind.

Als Alternative hat daher Tintenstrahldruck zunehmend an Bedeutung gewonnen. Mit diesen Verfahren ist die Herstellung solcher Platten prinzipiell flexibler. So sind beispielsweise kleinere Stückzahlen einer Serie nunmehr herstellbar.

In der Praxis hat es sich jedoch aus bisher ungeklärten Ursachen gezeigt, dass die Druckqualität im Siebdruck allgemein besser ist als im Tintenstrahldruck.

Die europäische Patentanmeldung EP 3 346 876 A1 beschreibt großflächige Arbeitsplatten für einen Küchenblock mit einer Mindestfläche von 0,7 m² und einer Planität von weniger als 0,1 % der Substratdiagonale. Auf die Qualität der Bedruckung wird hier allerdings nicht eingegangen. Auch wird kein Tintenstrahldruck genannt. Auch wird nicht auf die Oberflächenrauheit dieser Arbeitsplatte eingegangen, welche relevant für die Qualität eines Tintenstrahldruckes ist.

Die US-amerikanische Patentanmeldung US 2019/128534 A2 beschreibt eine Glaskeramikplatte für ein Küchenmöbel mit einer geringen Planität ("flatness") von weniger als 0,1% bezogen auf die Diagonale. Auch hier wird allerdings die Druckqualität oder ein Tintenstrahldruck nicht genannt. Auch wird nicht auf die Oberflächenrauheit dieser Arbeitsplatte eingegangen, welche relevant für die Qualität eines Tintenstrahldruckes ist.

Die japanische Patentanmeldung JP 2015/176753 A beschreibt polierte Oberflächen von Platten, die als Kochfelder verwendet werden. Hier wird allerdings nicht auf die Qualität eines aufgebrachten Dekors eingegangen, sondern der Fokus liegt vielmehr auf der Reflektivität der Oberflächen bzw. deren Glanz und auf dem visuellen Eindruck eines Unterseitendruckes

US 2021/188701 A1 offenbart auf mindestens zwei unterschiedlichen Teilbereichen beschichtete Glaskeramikplatten.

Kein Dokument des Standes der Technik adressiert die Verbesserung des Druckbildes gerade beim kontaktlosen Druck, wie beispielsweise mittels Tintenstrahldruck.

Es besteht damit also ein Bedarf an Glas- bzw. Glaskeramikplatten, welche ein gutes Druckbild in einem kontaktlosen Druckverfahren, wie beispielsweise dem Tintenstrahldruck, aufweisen, sowie an einem Verfahren zu deren Herstellung.

### Aufgabe der Erfindung

Die Aufgabe der Erfindung besteht in der Bereitstellung von Platten umfassend ein Substrat aus Glas oder Glaskeramik und wenigstens eine Beschichtung, welche die Probleme des Standes der Technik zumindest teilweise mindern. In entsprechender Weise besteht auch ein Bedarf an einem Verfahren zur Herstellung solcher Platten.

### Zusammenfassung der Erfindung

Die Aufgabe der Erfindung wird gelöst durch den Gegenstand der unabhängigen Ansprüche. Bevorzugte und spezielle Ausführungsformen finden sich in den abhängigen Ansprüchen sowie in der Beschreibung und den Zeichnungen der vorliegenden Offenbarung.

Die Offenbarung betrifft daher eine Platte umfassend Glas oder Glaskeramik mit zwei einander gegenüberliegenden Seitenflächen und einer umlaufenden Kantenfläche, wobei die Planität der Platte kleiner oder gleich 0,1% einer lateralen Abmessung beträgt und wenigstens eine Seite in wenigstens einem Bereich eine mittlere Oberflächenrauigkeit R_{z,mittel} von weniger als 0,5 µm aufweist bei einer Standardabweichung der Oberflächenrauigkeit, σ_{Rz} von weniger als 0,1 µm, weiter umfassend eine Beschichtung, die an wenigstens zwei unterschiedlichen Teilbereichen des wenigstens einen Bereichs der wenigstens einen Seite der Platte angeordnet ist, wobei die wenigstens zwei Teilbereiche wenigstens 3 cm voneinander beabstandet sind und wobei sich die Raggedness der Beschichtung in den beiden Teilbereichen um maximal 10% voneinander unterscheidet.

Eine solche Ausgestaltung weist eine Reihe von Vorteilen auf.

Denn die gleichzeitig gute Planität und Rauigkeit der Platte ermöglicht eine ausgezeichnete Druckqualität der Beschichtung, beispielsweise auch in einem Tintenstrahldruckverfahren. Die sehr gute Druckqualität zeigt sich insbesondere in der sogenannten "Raggedness" der entsprechenden Beschichtung. Vorzugsweise kann die Raggedness nach einer Ausführungsform bestimmt werden nach ISO 24790.

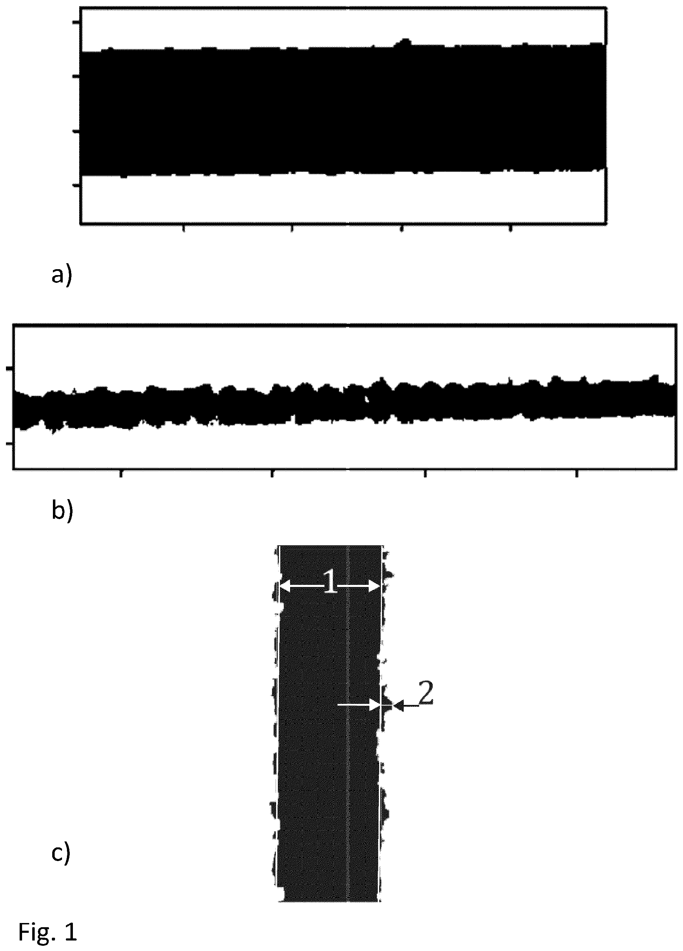

Die Raggedness ist ein Maß für die Bildqualität eines Druckbildes und beschreibt beispielsweise die sogenannte Kantenschärfe. Das Verfahren zur Bestimmung der Raggedness wird weiter unten in Fig. 1 detailliert erläutert.

Die Planität der Platte ist kleiner oder gleich 0,1% einer lateralen Abmessung, vorzugsweise der größten lateralen Abmessung, der Platte. Beispielsweise kann nach einer Ausführungsform die entsprechende laterale Abmessung der Platte die Diagonale einer rechteckförmigen Platte sein. Die Diagonale wird hier allgemein als die Flächendiagonale der Platte verstanden, also die Diagonale einer der Hauptflächen (oder Seiten) der Platte.

Allgemein wird im Rahmen der vorliegenden Offenbarung unter einer lateralen Abmessung eines der Längenmaße der Platte verstanden. Eine Platte wird im Rahmen der vorliegenden Anmeldung allgemein als ein Körper verstanden, dessen Abmessungen in zwei Raumrichtungen eines kartesischen Koordinatensystems wenigstens eine Größenordnung größer ist als in der dritten, zu diesen beiden ersten Raumrichtungen senkrechten Raumrichtung. Mit anderen Worten ist die Dicke einer Platte wenigstens eine Größenordnung geringer als dessen Länge und Breite. Länge und Breite der Platte bestimmen die Hauptflächen (im Gegensatz zu den umlaufenden Kantenflächen, welche nur einen geringen Anteil an der Gesamtoberfläche der Platte haben) für eine allgemein rechteckförmige Platte. Eine laterale Abmessung im Sinne der vorliegenden Offenbarung ist aber insbesondere die Flächendiagonale, welche im Rahmen der vorliegenden Anmeldung auch als Diagonale bezeichnet wird. Es handelt sich dabei um die größte laterale Abmessung einer allgemein rechteckförmigen Platte. Für den Fall einer nicht rechteckförmigen Platte kann beispielsweise der Durchmesser an die Stelle von Länge, Breite oder Diagonale treten und als entsprechende laterale Abmessung bezeichnet werden.

Vorteilhaft werden die mittlere Oberflächenrauigkeit R_{z,mittel} und die Standardabweichung der Oberflächenrauigkeit, σ_{Rz}, bestimmt, indem die Rauheit R_{z} a neun Punkten auf der Platte, welche jeweils wenigstens 5 cm, vorzugsweise wenigstens 10 cm und besonders bevorzugt wenigstens 15 cm voneinander beabstandet sind, gemessen und aus diesen neun Messwerten der arithmetische Mittelwert und die Standardabweichung bestimmt werden. Besonders bevorzugt ist R_{z} bestimmt durch Messung eines Linienprofils mit einem Tastschnittgerät und einer Auswertung gemäß ISO 4827.

Diese Planität ist vorteilhaft, da auf diese Weise eine homogene Auftragung sowohl der Beschichtung im Druck möglich ist und somit auch kleine und feine Strukturen mit hoher Qualität gedruckt werden können. Weiterhin ist dies aber auch deshalb vorteilhaft, da auf diese Weise die Verbaubarkeit einer Platte erhöht sein kann. Auch hat sich gezeigt, dass eine solche Anordnung die Sichtbarkeit von Displays verbessern kann. Denn durch eine gleichmäßige Oberfläche mit nur möglichst geringen Dickenschwankungen in der Platte sind Helligkeitsunterschiede in der Darstellung weitestgehend minimiert. Vorteilhaft ist dies insbesondere bei volumengefärbten Material. Hier gehen Dickenschwankungen über die Transmissionseigenschaften exponentiell ein.

Vorteilhaft kann dies noch damit kombiniert sein, dass die Platte nicht nur auf wenigstens einer Seite sehr glatt, also wenig rau, und plan ausgestaltet ist, sondern die beiden Seitenflächen zueinander parallel angeordnet sind. Ebenfalls bevorzugt kann daher nach einer Ausführungsform vorgesehen sein, dass die Seitenflächen zueinander parallel angeordnet sind. Als parallel wird eine Anordnung dann verstanden, wenn die Normalenwinkel auf die Seitenflächen miteinander einen Winkel von nicht mehr als 5° einschließen, vorzugsweise von nicht mehr als 2° und ganz besonders bevorzugt im Rahmen üblicher Fertigungs- und Messtoleranzen von 0°.

Ist eine Seite der Platte genoppt ausgebildet, wird zur Bestimmung des Normalenwinkels die Fläche angenommen, die sich durch die Noppenspitzen ergibt.

Die Erfinder gehen weiterhin auch davon aus, dass auf diese Weise auch allgemein die Verarbeitung der Platte verbessert wird. Durch die verbesserte Planität und Rauigkeitwird auch allgemein die Maßhaltigkeit der Platten verbessert. Damit sind diese aber auch leichter handhabbar und können beispielsweise besser verklebt werden.

Nach einer Ausführungsform kann die Platte eine Dicke zwischen 2 mm und 6 mm aufweisen. Dies ist gerade für eine Verwendung der Platte als Abdeckplatte in einem Kochgerät vorteilhaft, denn auf diese Weise kann ein guter Kompromiss zwischen möglichst geringer Dicke, welche für das Ankochverhalten vorteilhaft ist, und einer ausreichenden Festigkeit der Platte, die für eine solche Anwendung zwingend erforderlich ist und die umso größer ist, je größer die Plattendicke ist.

Allgemein ist die Planität und Rauigkeit der Platte nach der Offenbarung für alle Beschichtungsarten und -verfahren vorteilhaft. Besonders vorteilhaft ist dies jedoch für Tintenstrahldruckbeschichtungen.

Die Planität bestimmt nämlich den minimalen Abstand zum Druckkopf beim berührungslosen Ink-jet-Druckverfahren/Tintenstrahldruckverfahren. Es hat sich gezeigt, dass gerade für kontaktlose Druckverfahren für ein gutes Druckbild der Abstand zwischen dem Druckkopf und dem zu bedruckenden Substrat sehr wichtig ist. Bei einer Planität von mehr als 0,1% können hier bis zu 600 µm Höhendifferenz gegeben sein (beispielsweise bei einer Diagonale von 60 cm). Damit wäre es möglich, dass der Abstand zwischen dem Druckkopf und dem Substrat nicht ausreicht, dass der Tropfen nach Austritt aus dem Druckkopf auch wirklich abreißt und sich vollständig ausbildet. Gerade bei geringen Abständen zwischen Druckkopf und Substrat wie beispielsweise nur 1 mm kann dies sehr kritisch sein. Zwar wäre es theoretisch möglich, dies durch eine Inline-Bestimmung des Abstands von Platte und Druckkopf zu korrigieren, indem in Abhängigkeit vom gemessenen Abstand der Druckkopf höhenverstellt würde. Dies würde allerdings einen großen maschinellen Aufwand bedeuten. Durch die gezielte Verwendung ebener und planer Substrate kann dies allerdings geschickt umgangen werden.

Die geringe Planität ermöglicht das definierte Absetzen von Tropfen. Dies führt zu einer besseren Druckkontrolle und zu einem reproduzierbaren Absetzen von Tropfen. Damit ist auch eine verbesserte Auflösung von Druckbildern möglich.

Gerade beim Tintenstrahldruck hat es sich als wichtig herausgestellt, dass der Abstand zwischen dem Substrat und dem Druckkopf genau eingehalten wird. Nur dann ist nämlich gewährleistet, dass die Tropfenform der verwendeten Drucktinte oder Druckfarbe optimal ausgebildet ist. So ist es wichtig, dass ein Mindestabstand zwischen Druckkopf und Substrat eingehalten wird, welcher bei etwa 1,5 mm liegen kann. Je nach Druckmaschine sind aber auch geringe Abstände möglich von beispielsweise 1 mm. Wird der Mindestabstand unterschritten, kann sich die Tropfenform nicht optimal zumindest annähernd kugelig ausbilden.

Wird der Abstand zwischen Druckkopf und Substrat hingegen zu groß, kann es zur Ablenkung des Tropfens kommen, sodass dieser nicht auf der eigentlich vorgesehenen Stelle des Substrates landet und/oder sich sogenannte Satelliten bilden. Dies führt zu einer verringerten Kantenschärfe, gegebenenfalls auch zu Löchern im Druckbild.

Beides führt jeweils zu einem unruhigen und unscharfen Druckbild. Besonders schwierig ist es, wenn zwischen Bereichen eines Substrats verschiedene Druckbilder aufgebracht werden und dabei aufgrund einer mangelnden Planität und Rauigkeit die Druckbilder an unterschiedlichen Stellen der Platte unterschiedlich scharf gedruckt sind.

Gemäß einer Ausführungsform umfasst die Beschichtung einen Glasfluss und/oder ist als Emaille ausgebildet. Bevorzugt ist die Beschichtung als Beschichtung umfassend einen Glasfluss und/oder als Emaille ausgebildet und umfassend wenigstens ein Pigment. Besonders bevorzugt umfasst das wenigstens eine Pigment keine Pigmentpartikel mit einer Primärkorngröße, bestimmt als d₅₀-Wert des Äquivalentdurchmessers, von mehr als 1,0 µm umfasst, ganz besonders bevorzugt keine Pigmentpartikel mit einer Primärkorngröße, bestimmt als d₉₀-Wert des Äquivalentdurchmessers, von mehr als 2,5 µm.

Eine solche Ausgestaltung ist besonders vorteilhaft, weil Glasfluss umfassende Beschichtungen oder als Emaille ausgebildete Beschichtungen thermisch besonders stabil sind und weiterhin auch auf glasigen Oberflächen, wie den Oberflächen von Glas oder von Glaskeramik, gut haften. Beispielsweise können solche Beschichtungen so ausgestaltet sein, dass es zur Ausbildung einer sogenannten "Anschmelz-Reaktionszone" kommt, sodass die Beschichtung bzw. der von der Beschichtung umfasste Glasfluss und das Substratmaterial beim Brand eine innige Verbindung eingehen. Auf diese Weise sind solche Beschichtungen auch so ausgestaltet, dass sie beispielsweise als Oberseitendekor auf sogenannten Kochflächen verwendet werden können. Solche Oberseitendekore, die beispielsweise zum Druck von Logos oder zur Markierung von Kochzonen verwendet werden, müssen den teilweise sehr harten Reinigungsbedingungen (mit einem sogenannten Glasfeldschaber) sowie auch den Einsatzbedingungen (Abrasion beispielsweise durch das Verschieben von Kochgeschirr, teilweise unter Hitzebelastung) standhalten.

Im Rahmen der vorliegenden Offenbarung werden unter Beschichtungen, die einen Glasfluss umfassen, solche Beschichtungen verstanden, welche wenigstens einen glasigen Bestandteil aufweisen, beispielsweise hergestellt aus einer Paste umfassend ein Glaspulver. Im Rahmen der vorliegenden Offenbarung werden solche Beschichtungen auch als "Emaille" bezeichnet, insbesondere dann, wenn der Glasfluss während des Einbrandes zumindest teilweise aufschmilzt.

Prinzipiell ist es möglich, dass die auf dem Substrat angeordnete Beschichtung nur einen Glasfluss umfasst. In diesem Fall kann sie auch als "Glasur" verstanden oder bezeichnet werden. Allgemein ist es aber möglich und kann sogar bevorzugt sein, dass die Beschichtung neben einem Glasfluss wenigstens ein Pigment umfasst bzw. als Emaille umfassend wenigstens ein Pigment ausgebildet ist. Auf diese Weise wird zum einen die Sichtbarkeit einer Markierung erhöht, was beispielsweise die Benutzersicherheit eines mit einer solchen Platte ausgerüsteten Kochgeräts erhöhen kann. Zum anderen kann je nach der Art des Pigments auch die mechanische Beständigkeit der Beschichtung erhöht werden, beispielsweise, wenn ein besonders abrasionsfestes Pigment verwendet wird.

Geeignete Glasflüsse können beispielsweise eine Zusammensetzung auf Basis von SiO₂ und B₂O₃ oder auf Basis von Bi₂O₃ und SiO₂ aufweisen. Dabei bedeutet "auf Basis von", dass diese Komponenten wenigstens 50 Gew.-% der Zusammensetzung ausmachen.

Beispiele für Glasflüsse auf Basis von SiO₂ und B₂O₃ sind weiter unten genannt.

Zwei Beispiele für geeignete Glasflüsse auf Basis von Bi₂O₃ und SiO₂ sind in der folgenden Tabelle aufgeführt.

| Komponente | Gew.-% | Gew.-% |
|---|---|---|
| SiO₂ | 19,9 | 16,1 |
| B₂O₃ | 12,2 | 9,6 |
| Al₂O₃ | 0,6 | 0,5 |
| Na₂O | 5,3 | 4,3 |
| K₂O | 0,14 | 0,17 |
| ZnO | 3,9 | 10,2 |
| TiO₂ | 2,6 | 5,9 |
| ZrO₂ | 3,3 | 2,6 |
| SnO₂ | 0,12 | 5,6 |
| Bi₂O₃ | 50 | 42 |
| HfO₂ | 0,07 | 0,05 |
| Dichte [g/cm³] | 4,49 | 4,75 |
| α₂₀₋₃₀₀ [ppm/K] | 8,15 | 8,11 |
| T_{g} [°C] | 487 | 495 |
| E_{w} [°C] | 599 | 581 |
| Vₐ [°C] | 830 | 889 |

Unter einem Pigment wird vorliegend ein Farbkörper verstanden, welcher Feststoffpartikel umfasst. Insbesondere kann das Pigment nach der vorliegenden Offenbarung als keramischer Farbkörpers ausgestaltet sein. Unter "keramisch" werden im Rahmen der vorliegenden Offenbarung anorganische, nichtmetallische Stoffe verstanden. Dies ist vorteilhaft, weil keramische Farbkörper über eine hohe Temperaturbeständigkeit verfügen, welche gerade für die hier adressierten Anwendungen notwendig ist.

Vorteilhaft kann es weiterhin auch sein, wenn die Primärkorngröße der Pigmentpartikel, also der vom Farbkörper umfassten Partikel, entsprechend, wie vorstehend ausgeführt, begrenzt ist. Dies ist vorteilhaft für die Beschichtung mittels Tintenstrahldruck, ohne dass es zu einem Verstopfen der Düsen kommt. Weiterhin vereinfacht die Verwendung feiner Pigmentpartikel auch den Druck feiner Strukturen und kann daher hier besonders vorteilhaft zum Einsatz kommen, denn durch die große Ebenheit und Planität der Platte nach der vorliegenden Offenbarung sind solche feinen Strukturen nunmehr besonders gut darstellbar.

Insbesondere ist es auch möglich, dass die Platte als beidseitig glatte Platte ausgebildet ist, worunter insbesondere verstanden wird, dass keine Seite der Platte genoppt ausgebildet ist. Beidseitig glatte Platten können besonders dann vorteilhaft sein, wenn hochauslösende Displays unterhalb der Platte angeordnet sein sollen. Gerade die geringe Rauheit und die geringe Rauigkeit der Platte eignen sich für eine solche Ausgestaltung besonders gut und können daher auch gut mit einem hochauflösenden Display verbunden werden.

Alternativ, insbesondere in Fällen, in denen eine besonders hohe Festigkeit der Platte erforderlich oder vorteilhaft ist, kann es auch vorgesehen sein, dass eine Seite der Platte glatt und die dieser Seite gegenüberliegende Seite genoppt ausgebildet ist, wobei die Beschichtung auf der glatten Seite der Platte angeordnet ist. In diesem Fall ist die genoppte Seite der Platte als Unterseite ausgebildet. Durch die Noppenstruktur können eventuelle mechanische Beschädigungen des glasigen oder glaskeramischen Materials hinsichtlich ihrer Auswirkung auf die Festigkeit der Platte zumindest etwas abgemildert werden. Dadurch wird auch das Handling der Platte erleichtert.

Gemäß einer Ausführungsform umfasst die Platte eine Glaskeramik, wobei die Glaskeramik vorzugsweise wenigstens eines der folgenden Merkmale umfasst:
- die Glaskeramik ist volumengefärbt ausgebildet,
- die Glaskeramik umfasst an der wenigstens einen Seite keine glasig ausgebildet Oberflächenzone.

Eine Ausgestaltung der Platte in der Form, dass sie Glaskeramik umfasst, ist besonders vorteilhaft, weil Glaskeramik, insbesondere eine sogenannte Lithium-Aluminium-Silikatglaskeramik, eine hohe Festigkeit und eine niedrige Wärmedehnung aufweisen und damit auch eine ausreichende Temperaturunterschiedsfestigkeit, um in Kochgeräten besonders vorteilhaft verwendet werden zu können.

Geeignete Glaskeramik können unter Verwendung unterschiedlicher Läutermittel hergestellt werden. So eignen sich beispielsweise Glaskeramiken, die mittels As2O3, Sb2O3, SnO2, CeO2 oder Kombinationen davon geläutert wurden.

Beispielsweise sind Glaskeramiken mit folgender Zusammensetzung in Gew.-% auf Oxidbasis geeignet:

| Komponente | 1 | 2 | 3 | 4 | Bereich |
|---|---|---|---|---|---|
| Al₂O₃ | 21,23 | 21,35 | 21,30 | 20,47 | 20-23 |
| As₂O₃ | 0,59 | 0,00 | 0,01 | 0,00 | 0-1 |
| BaO | 1,65 | 1,57 | 1,70 | 1,71 | 1-2 |
| CaO | 0,23 | 0,32 | 0,39 | 0,32 | 0-1 |
| CeO₂ | 0,00 | 0,00 | 0,22 | 0,22 | 0-0,5 |
| Cr₂O₃ | 0 | 0 | 0 | 0 | 0-0,1 |
| CoO | 0 | 0 | 0 | 0 | 0-0,1 |
| Fe₂O₃ | 0,11 | 0,09 | 0,10 | 0,07 | 0,01-0,3 |
| K₂O | 0,14 | 0,12 | 0,14 | 0,24 | 0-1 |
| Li₂O | 3,65 | 3,90 | 3,94 | 3,62 | 3,0-4,5 |
| MgO | 0,43 | 0,67 | 0,58 | 0,58 | 0-1 |
| MnO₂ | 0,02 | 0,02 | 0,00 | 0,14 | 0-0,5 |
| MoO₃ | 0 | 0 | 0 | 0 | 0-0,4 |
| Na₂O | 0,66 | 0,66 | 0,68 | 0,44 | 0-1 |
| Nd₂O₃ | 0 | 0 | 0 | 0 | 0-0,5 |
| NiO | 0 | 0 | 0 | 0 | 0-0,5 |
| P₂O₅ | 0,87 | 0,78 | 0,95 | 1,18 | 0-3 |
| Sb₂O₃ | 0,00 | 0,00 | 0,00 | 0,07 | 0-0,2 |
| SiO₂ | 64,43 | 64,33 | 63,80 | 64,35 | 60-68 |
| SnO₂ | 0,02 | 0,24 | 0,23 | 0,18 | 0-0,6 |
| TiO₂ | 2,95 | 3,03 | 3,11 | 3,09 | 2-4 |
| V₂O₅ | 0,21 | 0,03 | 0,03 | 0,03 | 0-0,4 |
| ZnO | 1,19 | 1,25 | 1,23 | 1,61 | 0,5-3 |
| ZrO₂ | 1,58 | 1,60 | 1,54 | 1,52 | 0,5 - 3 |

Solche Glaskeramiken können auch noch bis zu 2 Gew.-% weitere Bestandteile, insbesondere in Form von Verunreinigungen enthalten.

Vorteilhaft kann es sein, dass die Glaskeramik volumengefärbt ist. Dies ist vorteilhaft, weil auf diese Weise die Glaskeramik selbst - insbesondere ohne dass eine Maskierungsschicht auf der dem Benutzer zu- oder abgewandten Seite zwingend erforderlich ist - hinreichend undurchsichtig ist, um hinter der Platte angeordnete Bauteile eines Kochgeräts abzuschatten.

Gemäß einer weiteren Ausführungsform umfasst die Platte eine Glaskeramik, wobei die Platte an der wenigstens eine Seite keine glasige ausgebildete Oberflächenzone umfasst. Es hat sich gezeigt, dass auf diese Weise eine besonders ebene und nur gering raue Oberfläche der wenigstens einen Seite erzielbar ist. Insbesondere kann dies dann erzielt werden, wenn die wenigstens eine Seite der Platte geschliffen und poliert vorliegt.

Gemäß einer weiteren bevorzugten Ausführungsform der Platte weist diese einen verbesserten character surround area haze auf. Dieser Wert beschreibt die Anzahl von Defekten bzw. Satelliten des Tropfens der Druckfarbe/Drucktinte um den abgesetzten Tropfen bzw. das Druckbild herum. Dieser Wert ist bei der Platte nach der vorliegenden Offenbarung verbessert, insbesondere wegen der geringen Rauheit bzw. der großen Ebenheit der Platte. Die Tropfen können auf diese Weise in einem kontaktlosen Verfahren gleichmäßig abgesetzt werden, und ein Ablenken des Tropfens ist ebenfalls viel weniger wahrscheinlich.

Die vorliegende Offenbarung betrifft auch ein Verfahren zum Herstellen einer Platte nach einer Ausführungsform der vorliegenden Offenbarung. Das Verfahren umfasst die Schritte:
- Bereitstellen einer Platte umfassend ein Glas oder eine Glaskeramik. Insbesondere kann die Platte ein Lithium-Aluminium-Silikatglas oder eine Lithium-Aluminium-Silikatglaskeramik umfassen. Vorzugweise weist die Platte eine Dicke zwischen 2 mm und 6 mm auf. Die Platte ist insbesondere plattenförmig ausgebildet, d.h. mit zwei einander gegenüberliegenden, vorzugsweise parallelen, Seitenflächen und einer umlaufenden Kantenfläche.
- Schleifen wenigstens einer Seite der Platte,
- Polieren wenigstens einer Seite der Platte, vorzugsweise der Seite, welche zuvor geschliffen wurde,
- Bedrucken wenigstens einer Seite der Platte, vorzugsweise der Seite, welche zuvor geschliffen und/oder poliert wurde, an wenigstens zwei unterschiedlichen Teilbereichen des wenigstens einen Bereichs der wenigstens einen Seite der Platte, sodass eine Beschichtung in diesen wenigstens zwei unterschiedlichen Teilbereich angeordnet ist, wobei die wenigstens zwei Teilbereich wenigstens 3 cm, vorzugsweise wenigstens 9 cm und besonders bevorzugt wenigstens 15 cm voneinander beabstandet sind.
   vorzugsweise kann das Bedrucken mittels eines kontaktlosen Druckverfahrens, vorzugsweise mittels Tintenstrahldruck, erfolgen.
- Einbrennen der Beschichtung.

Das Einbrennen kann mit einer Vielzahl bekannter Verfahren erfolgen. Beispielsweise kann das Einbrennen in einem Ofen, insbesondere einem Ofen zum thermischen Vorspannen von Gläsern oder zur Keramisierung von Glaskeramiken erfolgen. Hierbei können insbesondere auch Tunnelöfen zum Einsatz kommen. Die Temperaturen zum Einbrennen können bei mehr als 650 °C, mehr als 700 °C oder sogar mehr als 750 °C liegen.

Darüber hinaus können aber auch optische Verfahren wie Laserbestrahlung, insbesondere unter Verwendung von CO₂-Lasern, Blitzlampen ("Photonic Flash Sintering") oder kurzwellige Infrarotstrahlung (KIR-Strahler) verwendet werden.

Das Verfahren nach Ausführungsformen kann darüber hinaus beispielsweise so ausgeführt werden, dass beispielsweise ein sogenanntes Grünglas bedruckt wird. Dieses wird dann während des Einbrands in eine Glaskeramik umgewandelt (sogenannter Primärbrand).

Es kann allerdings bevorzugt sein, bereits eine Glaskeramik zu bedrucken. Diese kann bereits vor der Keramisierung geschliffen und poliert worden sein. Allerdings ist es ebenfalls möglich und kann auch bevorzugt sein, erst nach der Umwandlung in die Glaskeramik die Schritte des Schleifens und Polierens vorzunehmen. Dies kann deshalb vorteilhaft sein, weil eine hohe Maßhaltigkeit der Platte gerade dadurch ermöglicht wird. Denn durch eine Keramisierung können wegen der dabei notwendigen Temperaturen durchaus Größenänderungen in der Glaskeramik (beispielsweise Schrumpf) einhergehen, sodass die hohe Oberflächenqualität mit der vorteilhaften Ebenheit der Platte dann vermindert werden könnte. Auch ist es möglich, dass sich während einer Keramisierung die Rauheit der Oberfläche durch oxidierende Verunreinigungen und/oder die Anpassung des erweichenden Glaskörpers an die Unterlagsplatte erhöhen. Dies kann umgangen werden, wenn erst nach der Keramisierung die guten Oberflächeneigenschaften der Platte durch Schleifen und Polieren eingestellt werden. In diesem Fall erfolgt der Einbrand der Beschichtung dann in einem sogenannten Sekundärbrand, bei welchem auch niedrigere Temperaturen als für den Primärbrand möglich sind.

Gemäß einer Ausführungsform des Verfahrens umfasst die Beschichtung einen Glasfluss und/oder ist als Emaille ausgebildet. Bevorzugt umfasst die Beschichtung einen Glasfluss bzw. ist als Emaille ausgebildet und umfasst weiterhin wenigstens ein Pigment, wobei besonders bevorzugt das wenigstens eine Pigment keine Pigmentpartikel mit einer Primärkorngröße bestimmt als d₅₀-Wert des Äquivalentdurchmesser, von mehr als 1,0 µm umfasst, ganz besonders bevorzugt keine Pigmentpartikel mit einer Primärkorngröße, bestimmt als d₉₀-Wert des Äquivalentdurchmessers, von mehr als 2,5 µm.

Nach einer Ausführungsform umfasst die Platte ein Glas, insbesondere ein Grünglas, und das Einbrennen der Beschichtung findet während eines Keramisierungsschrittes statt, in welchem das Glas in eine Glaskeramik umgewandelt wird.

Gemäß einer weiteren bevorzugten Ausführungsform umfasst die Platte eine Glaskeramik, und das Einbrennen der Beschichtung findet in einem Sekundärbrand statt.

Die vorliegende Offenbarung betrifft auch eine Verwendung einer Platte nach Ausführungsformen und/oder hergestellt in einem Verfahren nach einer Ausführungsform als Kochfläche. Unter einer Kochfläche wird im Rahmen der vorliegenden Offenbarung eine Platte verstanden, welche als Abdeckplatte in einem Kochgerät verwendet wird. Synonym kann eine solche Kochfläche auch als Kochplatte bezeichnet werden. Unter einem Kochgerät wird im Rahmen der vorliegenden Offenbarung ein Gerät zum Zubereiten von Speisen mittels Erwärmen verstanden, insbesondere ein sogenanntes Kochfeld, auf welchem Kochgeschirr platziert wird.

### Beispiele

Im Folgenden wird die Erfindung anhand von Beispielen und Vergleichsbeispielen weiter erläutert.

### Beispiel 1

Es wurde ein volumengefärbtes, keramisiertes Glaskeramikmaterial (600* 600 mm²) einem zweistufigen Abtragsprozess unterzogen.

Der erste Schritt war ein grober Schleifabtrag mit einem sich drehendem Pad (d = 15 cm), welches mit einer CeO₂-Suspension getränkt war. Der d₅₀-Wert der Schleifmittelkörner lag zwischen 2 und 2,5 µm. Der Prozess wurde so lange durchgeführt, bis die Planität der Platte weniger als 0,1 % der Diagonale der Platte aufwies - in diesem Fall also bei weniger als 600 µm lag.

Nach der Erreichung des Zielwertes der Planität wurde mittels eines CO₂-Lasers mit einem Ortswellenlängenbereich von 100 um die Ausgangsrauigkeit durch lokale Erhitzung soweit verringert, bis eine Rauigkeit von R_{Z,mittel} von weniger als 0,5 µm vorlag.

Die so polierte Oberfläche wurde mit einem sekundärbrandfähigen Fluss mittels InkJet (Tintenstrahl) bedruckt. Die Druckfarbe wurde einem Einbrandprozess von 45 Minuten Dauer mit einer Maximaltemperatur von 750°C eingebrannt.

Der Druck bzw. das Druckbild anschließend eine sehr geringe Abweichung in der Druckqualität über die Platte auf (Raggedness bei Linien mit einer Breite von 300 µm bei 22,26 µm).

Die Zusammensetzung der Platte findet sich in der folgenden Tabelle:

| Komponente | Gew.-% |
|---|---|
| Li₂O | 3,74 |
| Al₂O₃ | 21,29 |
| SiO₂ | 65,21 |
| TiO₂ | 3,64 |
| ZrO₂ | 0,90 |
| SnO₂ | 0,28 |
| As₂O₃ | |
| Cr₂O₃ | 0,0035 |
| P₂O₅ | 0,052 |
| MnO₂ | 0,021 |
| Na₂O | 0,56 |
| K₂O | 0,41 |
| MgO | 0,31 |
| CaO | 0,44 |
| BaO | 1,31 |
| ZnO | 1,58 |
| V₂O₅ | 0,0026 |
| MoO₃ | 0,046 |
| Fe₂O₃ | 0,089 |
| α₅₀₋₇₀₀ | |
| α₂₀₋₇₀₀ | 0,14 * 10⁻⁶/K |
| α₂₅₋₇₀₀ | |

Die Zusammensetzung des Glasflusses findet sich in der nachfolgenden Tabelle:

| Komponente | Gew.-% |
|---|---|
| SiO₂ | 47,5 |
| B₂O₃ | 19 |
| Al₂O₃ | 2 |
| Li₂O | 4 |
| Na₂O | 7,5 |
| K₂O | 4 |
| CaO | 1 |
| BaO | 2 |
| ZnO | 8,75 |
| TiO₂ | 3,8 |
| Sb₂O₃ | 0,2 |

Die für den Druck verwendete Druckfarbe bzw. Tinte war wie folgt zusammengesetzt:

| | |
|---|---|
| Glasfluss 1 | 2,98 Gew.-% |
| Schwarzpigment CuCr₂O₄ | 1,05 Gew.-% |
| Weißpigment TiO₂ | 0,87 Gew.-% |
| Dipropylenglycolmethylether | 62,71 Gew.-% |
| Additiv 1 | 2,09 Gew.-% |
| Additiv 2 | 0,30 Gew.-% |

Bei Additiv 1 handelt es sich um Poly(oxy-1,2-ethanediyl), a-methyl-w-phosphate. Bei Additiv 2 um polyethermodifiziertes Polymethylsiloxan.

Mittels dieser Druckfarbe wird ein resultierender effektiver linearer thermischer Ausdehnungskoeffizient, α_{20-300, eff}, bezogen auf die von der Druckfarbe umfassten Glaspartikel und Pigmentpartikel, von 9,15 * 10⁻⁶/K erzielt.

### Beispiel 2:

Es wurde ein volumengefärbtes, keramisiertes Glaskeramikmaterial (600* 600 mm²) einem zweistufigen Abtragsprozess unterzogen.

Der erste Schritt war ein grober Schleifabtrag mit einem sich drehendem Pad (d = 15 cm), welches mit einer CeO₂-Suspension getränkt war. Der d₅₀-Wert der Schleifmittelkörner lag zwischen 2 und 2,5 µm. Der Prozess wurde so lange durchgeführt, bis die Planität der Platte weniger als 0,1 % der Diagonale der Platte aufwies - in diesem Fall also bei weniger als 600 µm lag.

Nach der Erreichung des Zielwertes der Planität wurde mittels eines Ion Beam Figuring (IBF) weiteres Material abgetragen, bis eine Rauigkeit von P_{Z,mittel} von weniger als 0,5 µm vorlag.

Die so polierte Oberfläche wurde mit einem sekundärbrandfähigen Fluss mittels InkJet (Tintenstrahl) bedruckt. Die Druckfarbe wurde einem Einbrandprozess von 45 Minuten Dauer mit einer Maximaltemperatur von 750°C eingebrannt.

Der Druck bzw. das Druckbild wies anschließend eine sehr geringe Abweichung in der Druckqualität über die Platte auf (Raggedness bei Linien mit einer Breite von 300 µm bei 29,04 µm).

Die Zusammensetzung des verwendeten glaskeramischen Materials findet sich in der folgenden Tabelle:

| Komponente | Gew.-% |
|---|---|
| Li₂O | 3,74 |
| Al₂O₃ | 21,29 |
| SiO₂ | 65,21 |
| TiO₂ | 3,64 |
| ZrO₂ | 0,90 |
| SnO₂ | 0,28 |
| As₂O₃ | |
| Cr₂O₃ | 0,0035 |
| P₂O₅ | 0,052 |
| MnO₂ | 0,021 |
| Na₂O | 0,56 |
| K₂O | 0,41 |
| MgO | 0,31 |
| CaO | 0,44 |
| BaO | 1,31 |
| ZnO | 1,58 |
| V₂O₅ | 0,0026 |
| MoO₃ | 0,046 |
| Fe₂O₃ | 0,089 |
| α₅₀₋₇₀₀ | |
| α₂₀₋₇₀₀ | 0,14 |
| α₂₅₋₇₀₀ | |

Die Zusammensetzung des verwendeten Glasflusses findet sich in der folgenden Tabelle:

| Komponente | Gew.-% |
|---|---|
| SiO₂ | 47,5 |
| B₂O₃ | 19 |
| Al₂O₃ | 2 |
| Li₂O | 4 |
| Na₂O | 7,5 |
| K₂O | 4 |
| CaO | 1 |
| BaO | 2 |
| ZnO | 8,75 |
| TiO₂ | 3,8 |
| Sb₂O₃ | 0,2 |

Die verwendete Druckfarbe/Tinte war wie folgt zusammengesetzt:

| | |
|---|---|
| Glasfluss 1 | 2,98 Gew.-% |
| Schwarzpigment CuCr₂O₄ | 1,05 Gew.-% |
| Weißpigment TiO₂ | 0,87 Gew.-% |
| Dipropylenglycolmethylether | 62,71 Gew.-% |
| Additiv 1 | 2,09 Gew.-% |
| Additiv 2 | 0,30 Gew.-% |

Bei Additiv 1 handelt es sich um Poly(oxy-1,2-ethanediyl), a-methyl-w-phosphate. Bei Additiv 2 um polyethermodifiziertes Polymethylsiloxan. Hiermit wird ein resultierender effektiver linearer thermischer Ausdehnungskoeffizient, α_{20-300, eff}, bezogen auf die von der Druckfarbe umfassten Glaspartikel und Pigmentpartikel, von 9,15 * 10⁻⁶/K erzielt.

### Beispiel 3:

Es wurde ein Grünglasmaterial (600* 600 mm²) einem zweistufigen Abtragsprozess unterzogen.

Der erste Schritt war ein grober Schleifabtrag mit einem sich drehendem Pad (d = 15 cm), welches mit einer CeO₂-Suspension getränkt war. Der d₅₀-Wert der Schleifmittelkörner lag zwischen 2 und 2,5 µm. Der Prozess wurde so lange durchgeführt, bis die Planität der Platte weniger als 0,1 % der Diagonale der Platte aufwies - in diesem Fall also bei weniger als 600 µm lag.

Nach der Erreichung des Zielwertes der Planität wurde mittels eines CO₂-Lasers mit einem Ortswellenlängenbereich von 100 µm die Ausgangsrauigkeit durch lokale Erhitzung soweit verringert, bis eine Rauigkeit von R_{Z,mittel} von weniger als 0,5 µm vorlag.

Die so polierte Oberfläche wurde mit einem sekundärbrandfähigen Fluss mittels InkJet (Tintenstrahl) bedruckt. Die Druckfarbe wurde einem Einbrandprozess von 45 Minuten Dauer mit einer Maximaltemperatur von 750°C eingebrannt.

Der Druck bzw. das Druckbild anschließend eine sehr geringe Abweichung in der Druckqualität über die Platte auf (Raggedness bei Linien mit einer Breite von 300 µm bei Linien bei 23,02 µm).

Nach dem Druck wurde das Substrat mit der Bedruckung einem Keramisierungsprozess unterzogen und in eine Glaskeramik umgewandelt.

### Vergleichsbeispiel 1

Bei Vergleichsbeispiel 1 liegt eine gute Planität bei gleichzeitig schlechter, also hoher, Rauigkeit vor. Dies führt zu einer stark veränderten Raggedness des Druckbildes, wie nachfolgend gezeigt ist.

Es wurde ein volumengefärbtes, keramisiertes Glaskeramikmaterial (600* 600 mm²) einem lediglich einstufigen Abtragsprozess unterzogen.

Dieser Schritt war ein grober Schleifabtrag mit einem sich drehendem Pad (d = 15 cm), welches mit einer CeO₂-Suspension getränkt war. Der d₅₀-Wert der Schleifmittelkörner lag zwischen 2 und 2,5 µm. Der Prozess wurde so lange durchgeführt, bis die Planität der Platte weniger als 0,1 % der Diagonale der Platte aufwies - in diesem Fall also bei weniger als 600 µm lag.

Nach dem Erreichen des Zielwertes der Planität wurde keine weitere Politur vorgenommen. Die Rauigkeit R_{Z,mittel} lag bei 0,7 µm.

Die so polierte Oberfläche wurde mit einem sekundärbrandfähigen Fluss mittels InkJet (Tintenstrahl) bedruckt. Die Druckfarbe wurde einem Einbrandprozess von 45 Minuten Dauer mit einer Maximaltemperatur von 750°C eingebrannt.

Der Druck bzw. das Druckbild anschließend eine Abweichung in der Druckqualität über die Platte auf (Raggedness bei Linien mit einer Breite von 300 µm bei 45,3 µm).

Die Zusammensetzung der Platte findet sich in der folgenden Tabelle:

| Komponente | Gew.-% |
|---|---|
| Li₂O | 3,74 |
| Al₂O₃ | 21,29 |
| SiO₂ | 65,21 |
| TiO₂ | 3,64 |
| ZrO₂ | 0,90 |
| SnO₂ | 0,28 |
| As₂O₃ | |
| Cr₂O₃ | 0,0035 |
| P₂O₅ | 0,052 |
| MnO₂ | 0,021 |
| Na₂O | 0,56 |
| K₂O | 0,41 |
| MgO | 0,31 |
| CaO | 0,44 |
| BaO | 1,31 |
| ZnO | 1,58 |
| V₂O₅ | 0,0026 |
| MoO₃ | 0,046 |
| Fe₂O₃ | 0,089 |
| α₅₀₋₇₀₀ | |
| α₂₀₋₇₀₀ | 0,14 * 10⁻⁶/K |
| α₂₅₋₇₀₀ | |

Die Zusammensetzung des Glasflusses findet sich in der nachfolgenden Tabelle:

| Komponente | Gew.-% |
|---|---|
| SiO₂ | 47,5 |
| B₂O₃ | 19 |
| Al₂O₃ | 2 |
| Li₂O | 4 |
| Na₂O | 7,5 |
| K₂O | 4 |
| CaO | 1 |
| BaO | 2 |
| ZnO | 8,75 |
| TiO₂ | 3,8 |
| Sb₂O₃ | 0,2 |

Die für den Druck verwendete Druckfarbe bzw. Tinte war wie folgt zusammengesetzt:

| | |
|---|---|
| Glasfluss 1 | 2,98 Gew.-% |
| Schwarzpigment CuCr₂O₄ | 1,05 Gew.-% |
| Weißpigment TiO₂ | 0,87 Gew.-% |
| Dipropylenglycolmethylether | 62,71 Gew.-% |
| Additiv 1 | 2,09 Gew.-% |
| Additiv 2 | 0,30 Gew.-% |

Bei Additiv 1 handelt es sich um Poly(oxy-1,2-ethanediyl), a-methyl-w-phosphate. Bei Additiv 2 um polyethermodifiziertes Polymethylsiloxan.

Mittels dieser Druckfarbe wird ein resultierender effektiver linearer thermischer Ausdehnungskoeffizient, α_{20-300, eff}, bezogen auf die von der Druckfarbe umfassten Glaspartikel und Pigmentpartikel, von 9,15 * 10⁻⁶/K erzielt.

### Vergleichsbeispiel 2

Bei Vergleichsbeispiel 2 liegt eine schlechte Planität bei allerdings guter, d.h. geringer Rauigkeit der Platte vor. Dies führt, wie nachfolgend gezeigt ist, zu einer schlechten Raggedness des Druckbildes.

Es wurde ein volumengefärbtes, keramisiertes Glaskeramikmaterial (600* 600 mm²) einem einstufigen Abtragsprozess unterzogen.

Es wurde kein Schleifprozess zur Erreichung der Planität durchgeführt. Die Planität lag bei 789 µm.

Die Platte wurde mittels eines CO₂-Lasers mit einem Ortswellenlängenbereich von 100 µm die Ausgangsrauigkeit durch lokale Erhitzung soweit verringert, bis eine Rauigkeit von R_{Z,mittel} von weniger als 0,5 µm vorlag.

Die polierte Oberfläche wurde mit einem sekundärbrand-fähigen Fluss mittels InkJet bedruckt. Durch die geringe Planität musste der Druckkopfabstand während des Druckes verändert werden, um Beschädigungen des Druckkopfs zu vermeiden. Die im Druckkopf generierten Tropfen hatten hierdurch eine unterschiedliche Weglänge zum Substrat. Die Druckfarbe wurde einem Einbrandprozess von 45 Minuten Dauer mit einer Maximaltemperatur von 750°C eingebrannt.

Der Druck bzw. das Druckbild anschließend eine Abweichung in der Druckqualität über die Platte auf (Raggedness bei Linien mit einer Breite von 300 µm bei 62,8 µm).

Die Zusammensetzung der Platte findet sich in der folgenden Tabelle:

| Komponente | Gew.-% |
|---|---|
| Li₂O | 3,74 |
| Al₂O₃ | 21,29 |
| SiO₂ | 65,21 |
| TiO₂ | 3,64 |
| ZrO₂ | 0,90 |
| SnO₂ | 0,28 |
| As₂O₃ | |
| Cr₂O₃ | 0,0035 |
| P₂O₅ | 0,052 |
| MnO₂ | 0,021 |
| Na₂O | 0,56 |
| K₂O | 0,41 |
| MgO | 0,31 |
| CaO | 0,44 |
| BaO | 1,31 |
| ZnO | 1,58 |
| V₂O₅ | 0,0026 |
| MoO₃ | 0,046 |
| Fe₂O₃ | 0,089 |
| α₅₀₋₇₀₀ | |
| α₂₀₋₇₀₀ | 0,14 * 10⁻⁶/K |
| α₂₅₋₇₀₀ | |

Die Zusammensetzung des Glasflusses findet sich in der nachfolgenden Tabelle:

| Komponente | Gew.-% |
|---|---|
| SiO₂ | 47,5 |
| B₂O₃ | 19 |
| Al₂O₃ | 2 |
| Li₂O | 4 |
| Na₂O | 7,5 |
| K₂O | 4 |
| CaO | 1 |
| BaO | 2 |
| ZnO | 8,75 |
| TiO₂ | 3,8 |
| Sb₂O₃ | 0,2 |

Die für den Druck verwendete Druckfarbe bzw. Tinte war wie folgt zusammengesetzt:

| | |
|---|---|
| Glasfluss 1 | 2,98 Gew.-% |
| Schwarzpigment CuCr₂O₄ | 1,05 Gew.-% |
| Weißpigment TiO₂ | 0,87 Gew.-% |
| Dipropylenglycolmethylether | 62,71 Gew.-% |
| Additiv 1 | 2,09 Gew.-% |
| Additiv 2 | 0,30 Gew.-% |

Bei Additiv 1 handelt es sich um Poly(oxy-1,2-ethanediyl), a-methyl-w-phosphate. Bei Additiv 2 um polyethermodifiziertes Polymethylsiloxan.

Mittels dieser Druckfarbe wird ein resultierender effektiver linearer thermischer Ausdehnungskoeffizient, α_{20-300, eff}, bezogen auf die von der Druckfarbe umfassten Glaspartikel und Pigmentpartikel, von 9,15 * 10⁻⁶/K erzielt.

### Beschreibung der Zeichnungen

Die Erfindung wird im Folgenden anhand von Figuren weiter erläutert. Es zeigen
- Fig. 1: eine schematische Darstellung zur Erläuterung der Raggedness,
- Fig. 2: eine Aufsicht auf eine schematische und nicht maßstabsgetreue Platte nach einer Ausführungsform, und
- Fig. 3 und 4: jeweils Seitenansichten schematischer und nicht maßstabsgetreuer Platten nach Ausführungsformen.

In Fig. 1 wird anhand dreier schematischer Darstellungen a), b) und c) das Prinzip der Raggedness sowie deren Bestimmung erläutert.

In Fig. 1a) und Fig. 1b) sind zwei Druckbilder dargestellt, von welchen das in Fig. 1a9 dargestellte eine nur geringe Raggedness aufweist und das in Fig. 1b) eine hohe Raggedness. "Raggedness" bedeutet wörtlich "Zerrissenheit" und kann als Maß für die Güte eines Druckbildes, insbesondere für dessen Kantenschärfe, begriffen werden. Eine hohe Raggedness bedeutet dabei eine geringe Kantenschärfe und umgekehrt.

In Fig. 1a) und Fig. 1b) sind Vergrößerungen von zwei "Liniendrucken" zu sehen. In Fig. 1b), der Darstellung mit hoher "Raggedness", sind teilweise noch die einzelnen Tropfen noch gut erkennbar, da diese nur unzureichend zu einem homogenen Druckbild verlaufen konnten. Die Kantenschärfe ist nur gering ausgebildet, teilweise sind Löcher im Druckbild erkennbar.

Demgegenüber steht die Darstellung in Fig. 1a), in welcher die Katenschärfe offensichtlich besser ist - was wiederum einer geringen Raggedness entspricht.

In Fig. 1c) ist schematisch das vergrößerte Druckbild einer "Linie" gezeigt. Zunächst wird nun der Bereich ausgewählt, welcher hinsichtlich der Linienbreite 1 beachtlich ist, und beide Kanten der Linie jeweils eine Gerade gefittet. Diese beiden Geraden, die die Grenzen der "idealen Linie" wiedergeben, sind in der Darstellung in Fig. 1c) als weiße Linien auf dem schwarzen Druckbild schematisch dargestellt.

Ausgehend von diesen beiden Linien wird dann die Standardabweichung der realen Grenzen des Druckbildes auf beiden Seiten von der Ideallinie bestimmt, wie dies in Fig. 1c) an der Stelle 2 schematisch dargestellt ist.

Die Raggedness ist das arithmetische Mittel der Standardabweichungen auf der einen, hier "linken", und der anderen, hier "rechten" Seite.

Vorzugsweise ist die Platte nach einer Ausführungsform so ausgestaltet, dass sich die Raggedness in den beiden Teilbereichen nur um höchstens 10% voneinander unterscheidet. Vorzugsweise liegt das Verhältnis der Raggedness in dem einen Teilbereich, R1, zu der Raggedness in dem zweiten Teilbereich, R2, also der Wert R1/R2 zwischen 0,5 bis 2, vorzugsweise zwischen 0,75 bis 1,5, besonders bevorzugt zwischen 0,9 bis 1,1.

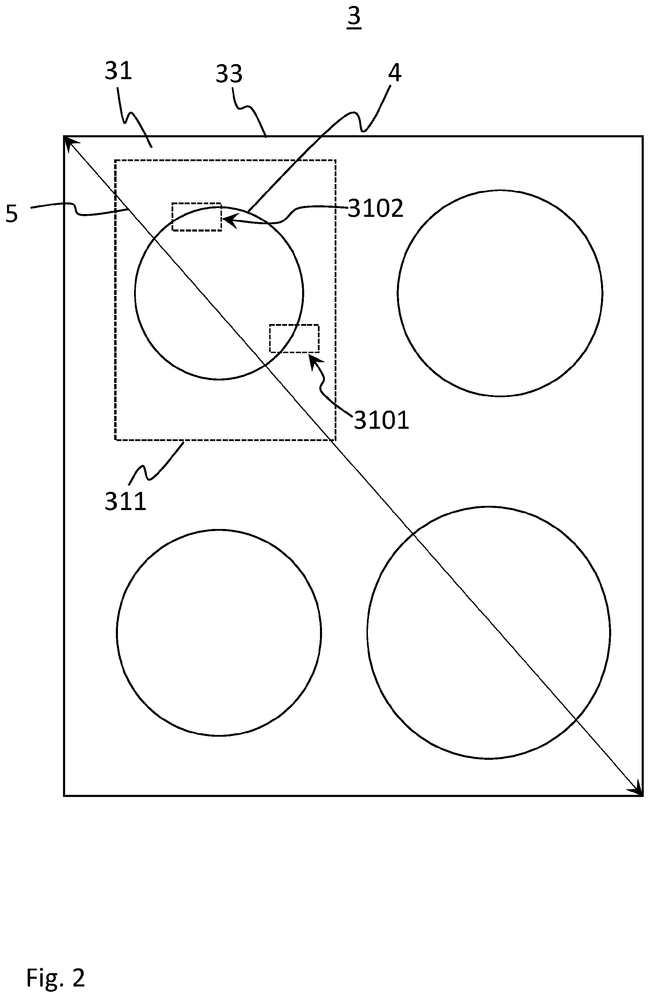

Fig. 2 ist eine schematische und nicht maßstabsgetreue Darstellung einer Platte 3 nach einer Ausführungsform. Die Platte 3 umfasst ein Glas oder eine Glaskeramik. Das Glas kann insbesondere ein Lithium-Aluminium-Silikatglas sein; die Glaskeramik eine Lithium-Aluminium-Silikatglaskeramik. Vorzugsweise weist die Platte 3 eine Dicke zwischen 2 mm und 6 mm auf. Die Platte weist zwei einander gegenüberliegende, vorzugsweise parallele, Seitenflächen auf, wobei vorliegend nur die Seitenfläche 31 sichtbar ist, sowie die umlaufende Kantenfläche 33. Die Planität der Platte 3 ist kleiner oder gleich 0,1% einer lateralen Abmessung 5, welche hier beispielhaft die Diagonale der rechteckig ausgestalteten Platte 3 ist. Vorzugsweise kann es sich bei der betrachteten lateralen Abmessung 5 um die maximale laterale Abmessung der Platte 3 handeln; beispielsweise um den Durchmesser einer kreisförmigen Platte 3.

Auf wenigstens einer Seite der Platte 3, hier der Seite 31, weist diese in wenigstens einem Bereich, hier dem Bereich 311, eine mittlere Oberflächenrauigkeit R_{z,minel} von weniger als 0,5 µm auf bei einer Standardabweichung der Oberflächenrauigkeit, σ_{Rz} von weniger als 0,1 µm. Vorzugsweise werden R_{z,mittel} und die Standardabweichung der Oberflächenrauigkeit, σ_{Rz}, bestimmt, indem die Rauheit R_{z} an neun Punkten auf der Platte 3, welche jeweils wenigstens 5 cm, vorzugsweise wenigstens 10 cm und besonders bevorzugt wenigstens 15 cm voneinander beabstandet sind, gemessen und aus diesen neun Messwerten der arithmetische Mittelwert und die Standardabweichung bestimmt werden, und wobei besonders bevorzugt R_{z} bestimmt ist durch Messung eines Linienprofils mit einem Tastschnittgerät und einer Auswertung gemäß ISO 4827.

Die Rauigkeit Rz wird auch als Rautiefe bezeichnet und gibt den maximalen Höhenunterschied entlang einer Mittellinie auf einer festgelegten Messtrecke an.

Weiterhin umfasst die Platte 3 eine Beschichtung 5, die an wenigstens zwei unterschiedlichen Teilbereichen 3101, 3102 des Bereichs 311 der wenigstens einen Seite 31 der Platte 3 angeordnet ist. Hier ist beispielhaft die Beschichtung 4 als Kochzonenmarkierung ausgebildet, und zwar in Form von vier auf die Seite 31 aufgebrachten Ringen. Der Bereich 311 umfasst hier beispielhaft eine dieser Kochzonenmarkierungen.

Prinzipiell ist es möglich, dass der Bereich 311 die gesamte Fläche der Seite 31 umfasst. Insbesondere ist es weiterhin auch möglich, dass die Teilbereiche 3101 und 3102 des Bereichs 311 unterschiedliche Kochzonenmarkierungen betreffen.

Die Raggedness der Beschichtung 5 in den beiden Teilbereichen 3101 und 3102 unterscheidet sich um maximal 10% voneinander, wobei vorzugsweise die Raggedness bestimmt ist nach ISO 24790.

Vorzugsweise kann nach einer Ausführungsform die Beschichtung 5 eine Tintenstrahldruckbeschichtung sein.

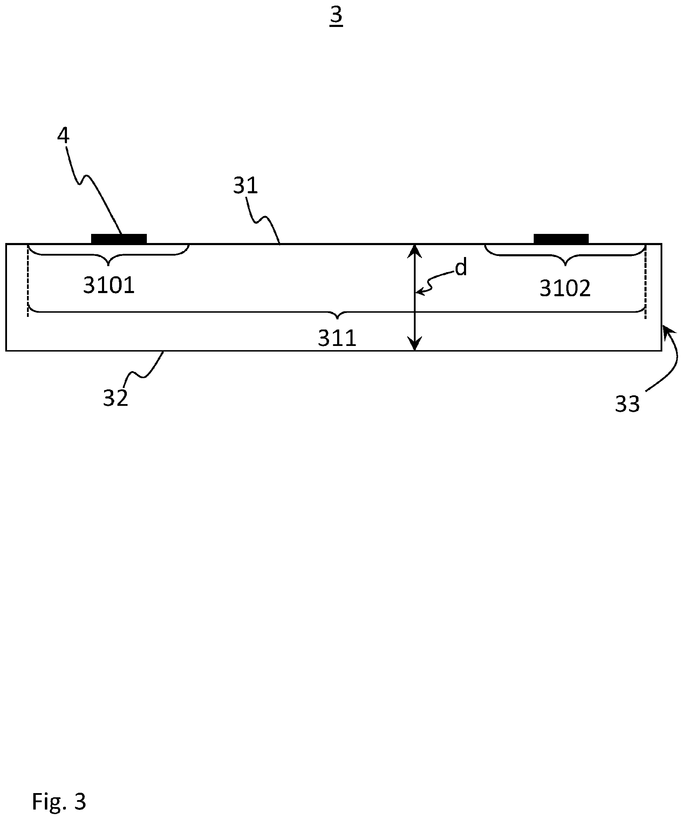

Die Fig. 3 zeigt eine schematische und nicht maßstabsgetreue Seitenansicht bzw. einen Schnitt einer Platte 3 nach einer Ausführungsform. Die Platte 3 umfassend ein Glas oder eine Glaskeramik, insbesondere ein Lithium-Aluminium-Silikatglas oder eine Lithium-Aluminium-Silikatglaskeramik, weist vorzugsweise eine Dicke d auf, welche zwischen 2 mm und 6 mm ist. Unter der Dicke der Platte 3 wird allgemein der Abstand zwischen den beiden Seitenflächen 31, 32 der Platte 3 verstanden. Die beiden Seitenflächen 31, 32 der Platte 3 liegen einander gegenüber und sind vorzugsweise, wie in der Darstellung der Fig. 3, zueinander im Rahmen der Messgenauigkeit parallel angeordnet.

Als parallel wird eine Anordnung dann verstanden, wenn die Normalenwinkel auf die Seitenflächen 31, 32 miteinander einen Winkel von nicht mehr als 5° einschließen, vorzugsweise von nicht mehr als 2° und ganz besonders bevorzugt im Rahmen üblicher Fertigungs- und Messtoleranzen von 0°.

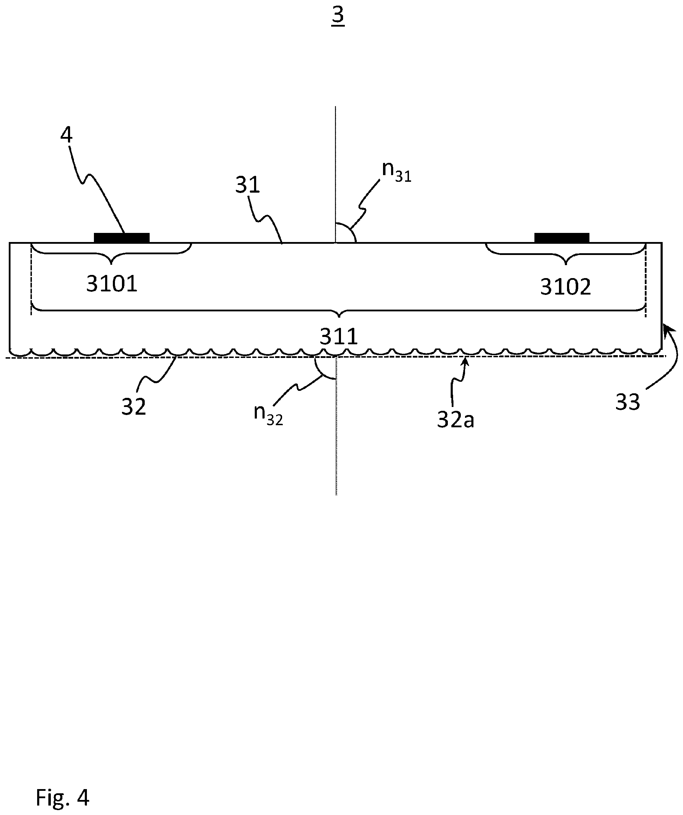

Ist eine Seite 31, 32 der Platte 3 genoppt ausgebildet, wird zur Bestimmung des Normalenwinkels die Fläche angenommen, die sich durch die Noppenspitzen ergibt. Dies ist schematisch weiter unten anhand der Fig. 4 gezeigt.

Weiter dargestellt ist in Fig. 3 die umlaufende Kantenfläche 33 der Platte 3.

Wenigstens die Seite 31, auf welcher insbesondere auch die Beschichtung 5 angeordnet ist, weist in wenigstens einem Bereich 311 wie ausgeführt eine nur geringe mittlere Rauheit R_{z,mittel} von weniger als 0,5 µm auf bei einer Standardabweichung der Oberflächenrauigkeit, σ_{Rz} von weniger als 0,1 µm.

Weiterhin umfasst die Platte 3 eine Beschichtung 5, welche an wenigstens zwei unterschiedlichen Teilbereichen 3101, 3102 des wenigstens einen Bereichs 311 angeordnet ist. Die wenigstens zwei Teilbereiche 3101, 3102 sind wenigstens 3 cm, vorzugsweise wenigstens 9 cm und besonders bevorzugt wenigstens 15 cm voneinander beabstandet, wobei sich die Raggedness der Beschichtung 5 in den beiden Teilbereichen 3101, 3102 um maximal 10% voneinander unterscheidet, wobei vorzugsweise die Raggedness bestimmt ist nach ISO 24790.

Es kann vorgesehen sein, dass auch die Seite 32 als sehr glatte und/oder sehr ebene Fläche ausgebildet ist. Allerdings ist es ebenfalls möglich und kann sogar bevorzugt sein, dass lediglich eine Seite, hier die Seite 31, welche im Betrieb eines Geräts, wie beispielsweise einem sogenannten Kochfeld, dem Benutzer oder Bediener zugewandt ist, die besonders gute Rauheit und Planität aufweist. Insbesondere kann vorgesehen sein, dass der Bereich 311 der Seite 31 der Platte 3 die gesamte Fläche der Seite 31 umfasst, also mit anderen Worten die gesamte Seite 31 als sehr glatte, plane Fläche ausgebildet ist. Auf diese Weise ist es nämlich möglich, auf der gesamten Seite 31 gleichmäßig gute Druckbilder zu erzielen, insbesondere auch in einem kontaktlosen Druckverfahren wie beispielsweise dem Tintenstrahldruck.

In dem Fall, dass die der als Oberseite ausgestalteten Seite 31 gegenüberliegende Seite 32 der Platte 3 nicht ebenfalls so glatt und plan ausgebildet ist wie die Seite 31 kann es vorgesehen sein, dass die Seite 32 beispielsweise genoppt ausgebildet ist. Vorteilhaft kann dies beispielsweise damit kombiniert sein, dass die Platte 3 eine Glaskeramik umfasst, welche gefärbt ist, da in diesem Fall durch die Eigenfärbung der von der Platte 3 umfassten Glaskeramik die Noppen nicht störend sichtbar sind. Eine solche Ausgestaltung kann insbesondere in dem Fall vorteilhaft sein, wenn eine besonders gute Festigkeit der Platte 3 gewünscht ist.

Fig. 4 zeigt in schematischer und nicht maßstabsgetreuer Darstellung eine Seitenansicht einer Platte 3 nach einer Ausführungsform. Die Platte 3 weist eine Seite 31 auf, welche eine sehr gute Planität aufweist und eine sehr geringe mittlere Rautiefe, also sehr glatt ausgebildet ist. Die Seite 31 ist als Oberseite ausgebildet, also dazu bestimmt in der betrieblichen Nutzung eines Geräts, für welches die Platte 3 als Abdeckplatte verwendet wird (beispielsweise für ein sogenanntes Kochfeld), dem Benutzer zugewandt zu werden. Auf der Seite 31 der Platte 3 ist in den zwei Teilbereichen 3101, 3102 des Bereichs 311, der wenigstens die gute Planität und Glattheit aufweist, jeweils die Beschichtung 4 angeordnet, welche insbesondere durch ein kontaktloses Druckverfahren, wie beispielsweise Tintenstrahldruck, aufgebracht worden sein kann. Beispielsweise kann allgemein, ohne Beschränkung auf das hier konkret dargestellte Beispiel der Platte 3, die Beschichtung 4 als Kochzonenmarkierung ausgebildet sein, aber auch als Logo. Insbesondere kann die Beschichtung 4 als Glasfluss-basierte Beschichtung ausgebildet sein bzw. einen Glasfluss umfassen kann bzw. als Emaille ausgebildet sein, und es ist weiterhin möglich und kann sogar bevorzugt sein, dass die Beschichtung 4 als Glasfluss-basierte Beschichtung ausgebildet ist (oder einen Glasfluss umfasst) bzw. als Emaille ausgebildet ist und weiterhin wenigstens ein Pigment umfasst, insbesondere ein keramisches Pigment. Das wenigstens eine Pigment umfasst bevorzugt keine Pigmentpartikel mit einer Primärkorngröße, bestimmt als d₅₀-Wert des Äquivalentdurchmesser, von mehr als 1,0 µm, ganz besonders bevorzugt keine Pigmentpartikel mit einer Primärkorngröße, bestimmt als d₉₀-Wert des Äquivalentdurchmessers, von mehr als 2,5 µm.

Die Platte 3 ist hier in der schematischen und nicht maßstabsgetreuen Abbildung von Fig. 4 so ausgebildet, dass die der Seite 31 gegenüberliegende Seite 32 der Platte 3 genoppt ausgebildet ist. Die beiden gegenüberliegenden Seiten 31, 32 sind dabei hier so ausgebildet, dass sie zueinander parallel sind. Um dies zu bestimmen wird, wie dies schematisch in Fig. 4 dargestellt ist, der Normalenwinkel auf die beiden Seiten 31, 32 bestimmt, also die Winkel n₃₁ und n₃₂. Für den Fall einer genoppten Seite 32 wird dazu eine Fläche 32a, in der schematischen Schnittdarstellung der Fig. 4 dargestellt als gestrichelte Linie, ermittelt, welche durch die Spitzen der Noppen gegeben ist. Der Normalenwinkel auf diese Fläche wird dann als Normalenwinkel n₃₂ der Seite 32 angenommen.

Wie man der schematischen Darstellung in Fig. 4 entnehmen kann, sind die Normalen auf die beiden Seiten 31, 32 zueinander im Rahmen der Messgenauigkeit parallel, sodass auch die Seiten 31, 32 zueinander im Rahmen der Messgenauigkeit parallel ausgebildet sind.

**Bezugszeichenliste**

| | |
|---|---|
| 1 | Linienbreite |
| 2 | Abweichung von Kante des Druckbildes |
| 3 | Platte |
| 31, 32 | Seitenflächen der Platte |
| 32a | Ermittelte Fläche einer genoppten Platte bzw. Seite 32 |
| 33 | Umlaufende Kantenfläche |
| 311 | Bereich der Seite 31 |
| 3101, 3102 | Teilbereich von 311 |
| 4 | Beschichtung |
| 5 | laterale Abmessung von 3 |
| n₃₁, n₃₂ | Normalenwinkel auf 31, 32 |

## Patentansprüche

1. Platte umfassend Glas oder Glaskeramik, insbesondere ein Lithium-Aluminium-Silikatglas oder eine Lithium-Aluminium-Silikatglaskeramik, vorzugsweise mit einer Dicke zwischen 2 mm und 6 mm, mit zwei einander gegenüberliegenden, vorzugsweise parallelen, Seitenflächen und einer umlaufenden Kantenfläche, wobei
die Planität der Platte kleiner oder gleich 0,1% einer lateralen Abmessung, beispielsweise einer Diagonale, der Platte beträgt und
wenigstens eine Seite in wenigstens einem Bereich eine mittlere Oberflächenrauigkeit R_{z,mittel} von weniger als 0,5 µm aufweist bei einer Standardabweichung der Oberflächenrauigkeit, σ_{Rz} von weniger als 0,1 µm,
wobei vorzugsweise R_{z,mittel} und die Standardabweichung der Oberflächenrauigkeit, σ_{Rz}, bestimmt werden, indem die Rauheit R_{z} an neun Punkten auf der Platte, welche jeweils wenigstens 5 cm, vorzugsweise wenigstens 10 cm und besonders bevorzugt wenigstens 15 cm voneinander beabstandet sind, gemessen und aus diesen neun Messwerten der arithmetische Mittelwert und die Standardabweichung bestimmt werden, und wobei besonders bevorzugt R_{z} bestimmt ist durch Messung eines Linienprofils mit einem Tastschnittgerät und einer Auswertung gemäß ISO 4827,
und weiter umfassend eine Beschichtung, die an wenigstens zwei unterschiedlichen Teilbereichen des wenigstens einen Bereichs der wenigstens einen Seite der Platte angeordnet ist, wobei die wenigstens zwei Teilbereiche wenigstens 3 cm, vorzugsweise wenigstens 9 cm und besonders bevorzugt wenigstens 15 cm voneinander beabstandet sind und wobei sich die Raggedness der Beschichtung in den beiden Teilbereichen um maximal 10% voneinander unterscheidet, wobei vorzugsweise die Raggedness bestimmt ist nach ISO 24790.

2. Platte nach Anspruch 1, wobei die Beschichtung eine Tintenstrahldruckbeschichtung ist.

3. Platte nach einem der Ansprüche 1 oder 2, wobei die Beschichtung einen Glasfluss umfasst und/oder als Emaille ausgebildet ist, bevorzugt als Beschichtung umfassend einen Glasfluss und/oder als Emaille ausgebildet und umfassend wenigstens ein Pigment, wobei besonders bevorzugt das wenigstens eine Pigment keine Pigmentpartikel mit einer Primärkorngröße bestimmt als d₅₀-Wert des Äquivalentdurchmesser, von mehr als 1,0 µm umfasst, ganz besonders bevorzugt keine Pigmentpartikel mit einer Primärkorngröße, bestimmt als d₉₀-Wert des Äquivalentdurchmessers, von mehr als 2,5 µm.

4. Platte nach einem der Ansprüche 1 bis 3,
wobei die Platte als beidseitig glatte Platte ausgebildet ist, insbesondere in der Form, dass keine Seite der Platte genoppt ausgebildet ist, oder
wobei die Platte in der Form ausgebildet ist, dass eine Seite glatt und die gegenüberliegende Seite genoppt ausgebildet ist und wobei die Beschichtung auf der glatten Seite der Platte angeordnet ist.

5. Platte nach einem der Ansprüche 1 bis 4, wobei die Platte eine Glaskeramik umfasst, vorzugsweise aufweisend wenigstens eines der folgenden Merkmale:
- die Glaskeramik ist volumengefärbt ausgebildet,
- die Glaskeramik umfasst an der wenigstens eine Seite keine glasig ausgebildete Oberflächenzone.

6. Verfahren zum Herstellen einer Platte nach einem der Ansprüche 1 bis 5, umfassend die Schritte:
- Bereitstellen einer Platte umfassend ein Glas oder eine Glaskeramik, insbesondere ein Lithium-Aluminium-Silikatglas oder eine Lithium-Aluminium-Silikatglaskeramik, vorzugsweise mit einer Dicke zwischen 2 mm und 6 mm, mit zwei einander gegenüberliegenden, vorzugsweise parallelen, Seitenflächen und einer umlaufenden Kantenfläche,
- Schleifen wenigstens einer Seite der Platte,
- Polieren wenigstens einer Seite der Platte,
- Bedrucken wenigstens einer Seite der Platte an wenigstens zwei unterschiedlichen Teilbereichen des wenigstens eines Bereichs der wenigstens einen Seite der Platte, sodass eine Beschichtung in diesen wenigstens zwei unterschiedlichen Teilbereichen angeordnet ist, wobei die wenigstens zwei Teilbereiche wenigstens 3 cm, vorzugsweise wenigstens 9 cm und besonders bevorzugt wenigstens 15 cm voneinander beabstandet sind, vorzugsweise Bedrucken mittels eines kontaktlosen Druckverfahrens, vorzugsweise mittels Tintenstrahldruck,
- Einbrennen der Beschichtung.

7. Verfahren nach Anspruch 6, **gekennzeichnet durch** wenigstens eines der folgenden Merkmale:
- die Beschichtung umfasst einen Glasfluss und/oder ist als Emaille ausgebildet ist, bevorzugt eine Beschichtung umfassend einen Glasfluss und/oder ausgebildet als Emaille und umfassend wenigstens ein Pigment, wobei besonders bevorzugt das wenigstens eine Pigment keine Pigmentpartikel mit einer Primärkorngröße bestimmt als d₅₀-Wert des Äquivalentdurchmesser, von mehr als 1,0 µm umfasst, ganz besonders bevorzugt keine Pigmentpartikel mit einer Primärkorngröße, bestimmt als d₉₀-Wert des Äquivalentdurchmessers, von mehr als 2,5 µm,
- die Platte umfasst ein Glas, insbesondere ein Grünglas, und das Einbrennen der Beschichtung findet während eines Keramisierungsschrittes statt, in welchem das Glas in eine Glaskeramik umgewandelt wird,
- die Platte umfasst eine Glaskeramik, und das Einbrennen der Beschichtung findet in einem Sekundärbrand statt.

8. Verwendung einer Platte nach einem der Ansprüche 1 bis 5 und/oder hergestellt in einem Verfahren nach einem der Ansprüche 6 oder 7 als Kochfläche.

## Claims

1. Plate comprising glass or glass-ceramic, more particularly a lithium aluminium silicate glass or a lithium aluminium silicate glass-ceramic, preferably having a thickness of between 2 mm and 6 mm, having two mutually opposite, preferably parallel, side faces and a circumferential edge face, where
the flatness of the plate is less than or equal to 0.1% of a lateral dimension, for example a diagonal, of the plate, and
at least one side in at least one region has a mean surface roughness R_{z,mean} of less than 0.5 µm with a standard deviation of the surface roughness, σ_{Rz}, of less than 0.1 µm,
where preferably R_{z,mean} and the standard deviation of the surface roughness, σ_{Rz}, are determined by measuring the roughness R_{z} at nine points on the plate, which are each at least 5 cm, preferably at least 10 cm and more preferably at least 15 cm apart from one another, and from these nine measurement values determining the arithmetic mean and the standard deviation, and where more preferably R_{z} is determined by measuring a line profile with a stylus device and with evaluation according to ISO 4827,
and further comprising a coating which is disposed on at least two different subregions of the at least one region of the at least one side of the plate, where the at least two subregions are at least 3 cm, preferably at least 9 cm and more preferably at least 15 cm apart from one another and where the raggedness of the coating in the two subregions differs by not more than 10%, where preferably the raggedness is determined according to ISO 24790.

2. Plate according to Claim 1, where the coating is an inkjet print coating.

3. Plate according to either of Claims 1 and 2, where the coating comprises a glass flux and/or is embodied as enamel, preferably as coating comprising a glass flux and/or embodied as enamel and comprising at least one pigment, where more preferably the at least one pigment comprises no pigment particles having a primary grain size, determined as d₅₀ of the equivalent diameter, of more than 1.0 µm, very preferably no pigment particles having a primary grain size, determined as d₉₀ of the equivalent diameter, of more than 2.5 µm.

4. Plate according to any of Claims 1 to 3,
where the plate is embodied as a plate smooth on either side, more particularly in the form such that no side of the plate has a nubbed embodiment, or
where the plate is embodied in the form such that one side is smooth and the opposite side has a nubbed embodiment and where the coating is disposed on the smooth side of the plate.

5. Plate according to any of Claims 1 to 4, where the plate comprises a glass-ceramic, preferably having at least one of the following features:
- the glass-ceramic has a volume-coloured embodiment,
- the glass-ceramic comprises on the at least one side no vitreously embodied surface zone.

6. Process for producing a plate according to any of Claims 1 to 5, comprising the steps of:
- providing a plate comprising a glass or a glass-ceramic, more particularly a lithium aluminium silicate glass or a lithium aluminium silicate glass-ceramic, preferably having a thickness of between 2 mm and 6 mm, having two mutually opposite, preferably parallel, side faces and a circumferential edge face,
- grinding at least one side of the plate,
- polishing at least one side of the plate,
- printing at least one side of the plate on at least two different subregions of the at least one region of the at least one side of the plate, so that a coating is disposed in these at least two different subregions, where the at least two subregions are at least 3 cm, preferably at least 9 cm and more preferably at least 15 cm apart from one another, preferably printing by means of a contactless printing process, preferably by means of inkjet printing,
- baking the coating.

7. Process according to Claim 6, **characterized by** at least one of the following features:
- the coating comprises a glass flux and/or is embodied as enamel, preferably a coating comprising a glass flux and/or embodied as enamel and comprising at least one pigment, where more preferably the at least one pigment comprises no pigment particles having a primary grain size, determined as d₅₀ of the equivalent diameter, of more than 1.0 µm, very preferably no pigment particles having a primary grain size, determined as d₉₀ of the equivalent diameter, of more than 2.5 µm,
- the plate comprises a glass, more particularly a green glass, and the baking of the coating takes place during a ceramization step in which the glass is transformed into a glass-ceramic,
- the plate comprises a glass-ceramic, and the baking of the coating takes place in a secondary firing.

8. Use of a plate according to any of Claims 1 to 5 and/or produced in a process according to either of Claims 6 and 7 as a cooking surface.

## Revendications

1. Plaque comprenant du verre ou de la vitrocéramique, notamment un verre de silicate de lithium et d'aluminium ou une vitrocéramique de silicate de lithium et d'aluminium, de préférence d'une épaisseur comprise entre 2 mm et 6 mm, avec deux faces latérales opposées, de préférence parallèles, et une surface de bord périphérique,
la planéité de la plaque étant inférieure ou égale à 0,1 % d'une dimension latérale, par exemple d'une diagonale, de la plaque, et
au moins un côté dans au moins une zone présentant une rugosité de surface moyenne R_{z, moyenne} inférieure à 0,5 µm avec un écart type de la rugosité de surface, σ_{Rz} inférieur à 0,1 µm,
de préférence, R_{z, moyenne} et l'écart type de la rugosité de surface, σ_{Rz}, étant déterminés en mesurant la rugosité R_{z} en neuf points sur la plaque, qui sont espacés les uns des autres d'au moins 5 cm, de préférence d'au moins 10 cm et de manière particulièrement préférée d'au moins 15 cm, et la moyenne arithmétique et l'écart type étant déterminés à partir de ces neuf valeurs mesurées, et R_{z} étant de manière particulièrement préférée déterminée par mesure d'un profil linéaire avec un profilomètre à palpeur et une évaluation selon la norme ISO 4827,
et comprenant en outre un revêtement qui est agencé sur au moins deux zones partielles différentes de l'au moins une zone de l'au moins un côté de la plaque, les au moins deux zones partielles étant espacées d'au moins 3 cm, de préférence d'au moins 9 cm et de manière particulièrement préférée d'au moins 15 cm l'une de l'autre, et l'irrégularité du revêtement dans les deux zones partielles différant de 10 % au maximum l'une de l'autre, l'irrégularité étant de préférence déterminée selon la norme ISO 24790.

2. Plaque selon la revendication 1, le revêtement étant un revêtement imprimé par jet d'encre.

3. Plaque selon l'une quelconque des revendications 1 ou 2, le revêtement comprenant un flux de verre et/ou étant réalisé sous forme d'émail, de préférence réalisé sous forme de revêtement comprenant un flux de verre et/ou sous forme d'émail et comprenant au moins un pigment, l'au moins un pigment ne comprenant de manière particulièrement préférée pas de particules de pigment ayant une granulométrie primaire, déterminée en tant que valeur d₅₀ du diamètre équivalent, supérieure à 1,0 µm, de manière tout particulièrement préférée pas de particules de pigment ayant une granulométrie primaire, déterminée en tant que valeur d₉₀ du diamètre équivalent, supérieure à 2,5 µm.

4. Plaque selon l'une quelconque des revendications 1 à 3,
la plaque étant réalisée sous forme de plaque lisse des deux côtés, notamment de telle sorte qu'aucun côté de la plaque ne soit réalisé sous forme bosselée, ou
la plaque étant réalisée de telle sorte qu'un côté est réalisé sous forme lisse et le côté opposé sous forme bosselée, et le revêtement étant agencé sur le côté lisse de la plaque.

5. Plaque selon l'une quelconque des revendications 1 à 4, la plaque comprenant une vitrocéramique, présentant de préférence au moins l'une des caractéristiques suivantes :
- la vitrocéramique est réalisée sous forme teintée dans la masse,
- la vitrocéramique ne comprend pas, sur l'au moins un côté, de zone de surface réalisée sous forme vitreuse.

6. Procédé de fabrication d'une plaque selon l'une des revendications 1 à 5, comprenant les étapes suivantes :
- la fourniture d'une plaque comprenant un verre ou une vitrocéramique, notamment un verre de silicate de lithium et d'aluminium ou une vitrocéramique de silicate de lithium et d'aluminium, de préférence d'une épaisseur comprise entre 2 mm et 6 mm, avec deux faces latérales opposées, de préférence parallèles, et une surface de bord périphérique,
- le ponçage d'au moins un côté de la plaque,
- le polissage d'au moins un côté de la plaque,
- l'impression d'au moins un côté de la plaque sur au moins deux zones partielles différentes de l'au moins une zone de l'au moins un côté de la plaque, de telle sorte qu'un revêtement soit agencé dans ces au moins deux zones partielles différentes, les au moins deux zones partielles étant espacées d'au moins 3 cm, de préférence au moins 9 cm et de manière particulièrement préférée d'au moins 15 cm l'une de l'autre, de préférence l'impression au moyen d'un procédé d'impression sans contact, de préférence au moyen d'une impression à jet d'encre,
- la cuisson du revêtement.

7. Procédé selon la revendication 6, **caractérisé par** au moins l'une des caractéristiques suivantes :
- le revêtement comprend un flux de verre et/ou est réalisé sous forme d'émail, de préférence un revêtement comprenant un flux de verre et/ou réalisé sous forme d'émail et comprenant au moins un pigment, l'au moins un pigment ne comprenant de manière particulièrement préférée pas de particules de pigment ayant une granulométrie primaire, déterminée en tant que valeur d₅₀ du diamètre équivalent, supérieure à 1,0 µm, de manière tout particulièrement préférée pas de particules de pigment ayant une granulométrie primaire, déterminée en tant que valeur d₉₀ du diamètre équivalent, supérieure à 2,5 µm,
- la plaque comprend un verre, notamment un verre vert, et la cuisson du revêtement a lieu pendant une étape de céramisation au cours de laquelle le verre est transformé en vitrocéramique,
- la plaque comprend une vitrocéramique, et la cuisson du revêtement s'effectue lors d'une cuisson secondaire.

8. Utilisation d'une plaque selon l'une quelconque des revendications 1 à 5 et/ou fabriquée dans un procédé selon l'une quelconque des revendications 6 ou 7 en tant que surface de cuisson.
